# FASCICULE DE BREVET EUROPEEN

(11) **EP 2 903 845 B1**
(45) Date de publication et mention de la délivrance du brevet: **16.11.2016**
(21) Numéro de dépôt: 13782733.3
(22) Date de dépôt: 24.09.2013
(51) Int. Cl.: B60K 11/06

(54) **VEHICULE AUTOMOBILE COMPRENANT UN MOTEUR A COMBUSTION INTERNE ET UN VENTILATEUR DISPOSE DANS UN CARENAGE INFERIEUR REFERMANT LE COMPARTIMENT MOTEUR**
KRAFTFAHRZEUG MIT EINEM VERBRENNUNGSMOTOR UND EINEM GEBLÄSE IN EINEM GEHÄUSEUNTERTEIL ZUM VERSCHLUSS DES MOTORRAUMS
MOTOR VEHICLE COMPRISING AN INTERNAL COMBUSTION ENGINE AND A FAN ARRANGED IN A LOWER HOUSING CLOSING THE ENGINE COMPARTMENT

(30) Priorité: 02.10.2012 FR 1259324
(43) Date de publication de la demande: 12.08.2015
(73) Titulaire: Renault S.A.S., 92100 Boulogne-Billancourt (FR)
(72) Inventeur: MASSET, Ludovic, F-27120 Pacy Sur Eure (FR); DESFEUX, Ludovic, F-27400 Vironvay (FR); CASEN, Vincent, F-27600 Saint Pierre La Garenne (FR)
(86) Numéro de dépôt international: PCT/FR2013/052219
(87) Numéro de publication internationale: WO 2014/053736

(56) Documents cités:
- DE-A1- 4 339 936
- FR-A- 930 125
- GB-A- 2 476 279
- JP-A- S61 146 635

## Description

L'invention concerne les dispositifs de refroidissement du moteur d'un véhicule automobile à propulsion thermique ou hybride comportant un moteur à combustion interne.

Plus particulièrement l'invention concerne le refroidissement du compartiment moteur dans son ensemble.

Généralement, les véhicules automobiles sont équipés d'un compartiment moteur intégrant un moteur à combustion interne refermé par un carénage inférieur, un échangeur de chaleur, tel qu'un radiateur, traversé par un fluide caloporteur et un ventilateur placé en amont de l'échangeur de chaleur afin de souffler l'air vers le moteur et ainsi refroidir le moteur à combustion interne lorsque le véhicule est en fonctionnement.

On appelle « carénage inférieur », toute pièce permettant de refermer la partie inférieure du compartiment moteur, généralement ouverte, afin d'améliorer le comportement aérodynamique du véhicule.

Toutefois, un tel système permet uniquement de refroidir l'avant du moteur thermique, et l'air refroidi arrive difficilement au niveau de la partie arrière du moteur, de sorte que certains composants du moteur ne sont pas suffisamment refroidis et peuvent être endommagés par la chaleur.

De plus, lorsque le moteur à combustion interne est à l'arrêt ou tourne au ralenti, les composants se trouvant dans le compartiment moteur et notamment au-dessus du moteur, sont soumis à un phénomène de convection naturelle. En effet, lorsque le véhicule ne roule plus, l'air situé dans la zone confinée du compartiment moteur est fortement réchauffé, de sorte que les composants sont soumis à de fortes contraintes thermiques et peuvent être endommagés par la chaleur.

On peut se référer au document US 2010/0181050 qui décrit un véhicule comprenant deux ventilateurs destinés à refroidir l'avant d'un moteur thermique par l'intermédiaire d'un échangeur de chaleur. Un premier ventilateur est alimenté par un moteur électrique et émet de l'air à travers un échangeur de chaleur. L'air émis par le premier ventilateur est récupéré pour faire tourner un deuxième ventilateur apte à convertir l'énergie mécanique en énergie électrique et à recharger une batterie électrique.

Toutefois, un tel système est difficile à mettre en place car la combinaison de deux ventilateurs engendre un encombrement important. De plus, un tel système ne permet pas de refroidir l'ensemble des composants situés dans le compartiment moteur une fois que le véhicule est à l'arrêt.

Le document GB2476279 décrit un véhicule selon le préambule de la revendication 1.

On peut également se référer au document US 2010/0244445 qui décrit une turbine adaptée pour faire tourner un ventilateur, d'axe sensiblement horizontal, destiné à refroidir l'avant d'un moteur thermique par l'intermédiaire d'un échangeur de chaleur et pour convertir le travail fourni par le ventilateur mis en rotation par le flux d'air venant de l'extérieur en énergie électrique et à recharger une batterie électrique.

Un tel système nécessite la combinaison d'une turbine et d'un ventilateur afin de recharger une batterie électrique, et ne permet pas non plus de refroidir l'ensemble des composants situés dans le compartiment moteur une fois que le véhicule est à l'arrêt.

La présente invention a donc pour objet de remédier à ces inconvénients.

Le but de l'invention est donc de fournir un véhicule automobile comprenant un dispositif permettant de refroidir le compartiment du moteur à combustion interne de manière efficace, tout en présentant un faible encombrement.

Un autre but de l'invention est de fournir un dispositif de refroidissement du compartiment du moteur à combustion interne fonctionnement de manière autonome en énergie électrique.

La présente invention a pour objet un véhicule automobile à propulsion thermique ou hybride comprenant au moins un moteur à combustion interne disposé dans un compartiment moteur, un carénage inférieur destiné à fermer la partie inférieure du compartiment moteur.

Le véhicule automobile comprend un ventilateur d'axe vertical et un moteur électrique alimentant en énergie électrique le ventilateur, ledit ventilateur étant disposé de manière substantiellement horizontale dans le carénage inférieur sous le compartiment du moteur à combustion interne, de manière à souffler de l'air suivant une direction substantiellement verticale vers le moteur à combustion interne.

Ainsi, grâce à l'intégration du groupe moto-ventilateur directement dans le carénage inférieur, les composants disposés dans le compartiment du moteur thermique sont efficacement refroidis, y compris les composants disposés autour du moteur thermique.

Selon un mode de réalisation, le moteur électrique est alimenté en énergie électrique par le réseau électrique du véhicule automobile.

Selon un autre mode de réalisation, le moteur électrique est alimenté en énergie électrique par un moyen autonome de génération et de stockage d'énergie électrique.

Le moyen autonome de génération et de stockage d'énergie électrique peut être rechargé en énergie électrique par la rotation du ventilateur mis en rotation par le déplacement d'un flux d'air lorsque le véhicule automobile est en mouvement.

Le moteur électrique est, par exemple, un moteur à courant continu ou comprend des aimants permanents disposés à l'extrémité du ventilateur et un bobinage noyé dans le carénage inférieur, le moyen autonome de stockage d'énergie électrique étant rechargé par le courant induit par la variation de flux magnétique créée lors de la rotation du ventilateur.

Avantageusement, le véhicule automobile comprend une unité de commande électronique apte à commander la mise en rotation du ventilateur en fonction de la température mesurée par un moyen de mesure dans le compartiment du moteur thermique.

En outre, le véhicule automobile peut comprendre un volet d'admission d'air piloté par l'unité de commande électronique en fonction de la vitesse du véhicule, de l'état de charge du moyen autonome de génération et de stockage d'énergie électrique et des températures mesurées par au moins un moyen de mesure dans le compartiment du moteur à combustion interne.

Selon un mode de réalisation, le compartiment moteur et le carénage inférieur sont disposés à l'arrière du véhicule automobile.

Ainsi, grâce à l'intégration du ventilateur d'axe vertical au carénage inférieur, il est aisé de refroidir convenablement les moteur à combustion interne disposés à l'arrière du véhicule malgré l'encombrement réduit qui ne permet pas de recevoir un dispositif de refroidissement classique comprenant un échangeur de chaleur et un ventilateur d'axe horizontal en amont de l'échangeur de chaleur.

Avantageusement, le véhicule automobile comprend un dispositif de refroidissement du moteur à combustion interne disposé en amont du moteur à combustion interne et comportant un échangeur de chaleur dans lequel circule un fluide de refroidissement et un deuxième ventilateur d'axe horizontal disposé en amont ou en aval de l'échangeur de chaleur et destiné à souffler ou à aspirer de l'air au travers de l'échangeur de chaleur en direction sensiblement horizontale vers le moteur à combustion interne.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre, de manière schématique, une partie avant ou arrière d'un véhicule automobile selon l'invention ;
- la figure 2 représente une vue de dessous du véhicule selon la figure 1 ;
- la figure 3 représente un dispositif de ventilation selon un mode de réalisation de l'invention ; et
- la figure 4 représente un dispositif de ventilation selon un autre mode de réalisation de l'invention.

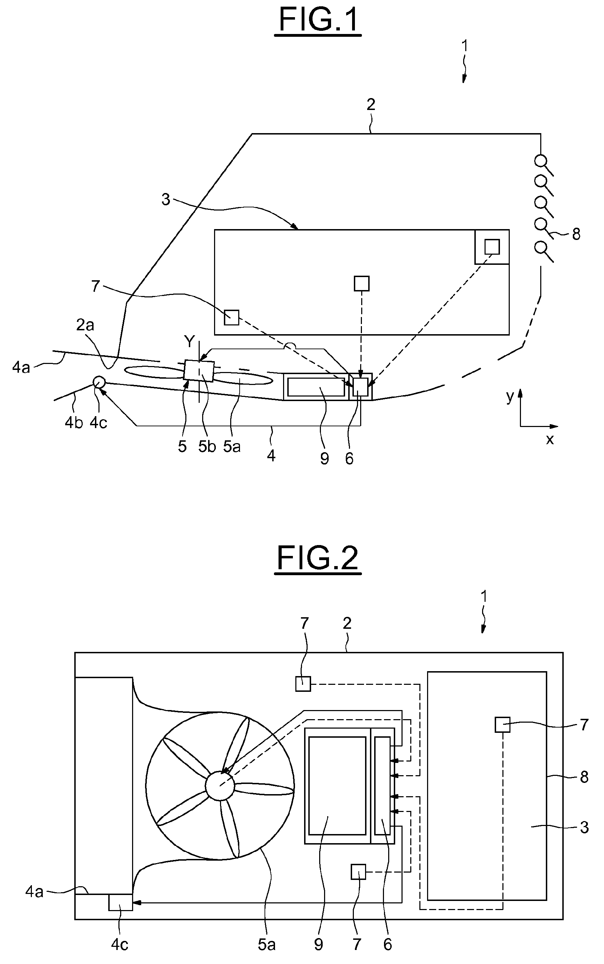

Les figures 1 et 2 illustrent schématiquement une partie avant ou arrière d'un véhicule automobile à propulsion thermique ou hybride, référencé 1 dans son ensemble, comprenant un compartiment moteur 2 destiné à loger le moteur à combustion interne 3.

La partie inférieure 2a du compartiment moteur 2 présente une ouverture refermée par un carénage inférieur 4. Le carénage inférieur 4 est par exemple une pièce rapportée en matériau synthétique, tel que par exemple du polypropylène ou du polyamide.

Le carénage inférieur 4 a pour effet d'améliorer l'aérodynamisme du véhicule automobile en réduisant, voire supprimant, la création d'une zone de turbulence du flux d'air entrant dans le compartiment 2 du moteur à combustion interne 3.

Le carénage inférieur 4 renferme un groupe moto-ventilateur 5 comprenant un ventilateur 5a d'axe vertical Y et un moteur électrique 5b alimentant en énergie électrique le ventilateur 5a. Le ventilateur 5a est disposé de manière substantiellement horizontale X dans le carénage inférieur 4 sous le compartiment 2 du moteur à combustion interne 3, de manière à souffler de l'air frais en direction substantiellement verticale Y vers le moteur à combustion interne 3 et notamment vers les composants situés au-dessus du moteur à combustion interne 3.

Dans la suite de la description, le terme « moteur électrique » définit toutes les machines qui convertissent l'énergie électrique en énergie mécanique, ou de l'énergie mécanique en énergie électrique.

Tel qu'illustré, le carénage inférieur comprend un conduit d'admission 4a d'air frais et un volet d'admission 4b d'air piloté par une unité de commande électronique 6 « UCE » destiné à commander l'ouverture et la fermeture du volet d'amission 4b d'air, par exemple par l'intermédiaire d'actionneurs 4c, en fonction de la température dans le compartiment moteur 2 mesurée par un ou plusieurs capteurs de température 7.

Lorsque le véhicule automobile fonctionne, le flux d'air admis par le conduit d'admission 4a d'air entraîne le ventilateur 5a qui refroidit le moteur à combustion interne 3.

Lorsque le véhicule automobile est à l'arrêt ou que le moteur thermique 3 fonctionne au ralenti, le flux d'air est insuffisant pour entraîner en rotation le ventilateur 5a et le compartiment 2 du moteur thermique 3, du à un phénomène de convection naturelle, est soumis à de fortes contraintes thermiques. Le ventilateur 5a est alors mis en rotation par le moteur électrique 5b, ce qui permet de refroidir le compartiment du moteur thermique 3. L'air soufflé par le ventilateur 5a est dirigé suivant l'axe vertical Y et s'écoule à travers des persiennes 8 situées sur un côté du compartiment 2 du moteur thermique 3. On appelle « persiennes » toute pièce composée de plusieurs vantaux ou de lamelles inclinées permettant d'évacuer l'air chaud présent dans le compartiment moteur 2.

Tel qu'illustré sur les figures, le moteur électrique 5b est alimenté en énergie électrique par un moyen autonome 9 de génération et de stockage d'énergie électrique, tel que par exemple une batterie électrique.

Le moyen autonome 9 de génération et de stockage d'énergie électrique est rechargé en énergie électrique par la rotation du ventilateur 5a entraîné en rotation par le déplacement d'un flux d'air lorsque le véhicule automobile 1 est en mouvement, le ventilateur 5a fonctionne alors en mode « générateur ». Le volet 4b peut également être piloté en fonction de la vitesse du véhicule automobile et de l'état de charge de la batterie électrique 9.

Lorsque le véhicule 1 est à l'arrêt ou que le moteur à combustion interne 3 fonctionne au ralenti, le moyen autonome 9 de génération et de stockage d'énergie électrique fourni de l'énergie électrique au moteur 5b du ventilateur 5a afin de le mettre en rotation, le ventilateur 5a fonctionne alors en mode « moteur ».

Le moteur électrique 5b peut être, par exemple un moteur à courant continu ou peut être un moteur à courant alternatif.

Le moteur à courant continu étant par définition réversible, il fonctionne en mode « générateur » et en mode « moteur ».

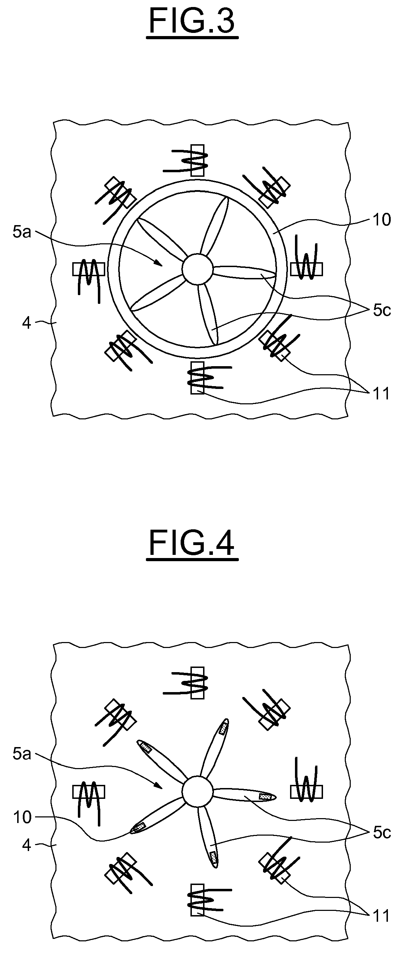

Tel qu'illustré sur les figures 3 et 4, le moteur à courant alternatif est constitué par la combinaison de moyens aimantés 10 situés sur la circonférence du ventilateur 5a et de bobinages 11 noyés dans la matière du carénage inférieur 4.

Les moyens aimantés 10 sont, par exemple, sous la forme d'une couronne aimantée telle qu'illustrée sur la figure 3 ou sous la forme d'aimants permanents disposés aux extrémités de chacune des pales 5c du ventilateur 5a tels qu'illustrés sur la figure 4.

Dans le cas d'un tel moteur à courant alternatif, le moyen autonome 9 de stockage d'énergie électrique est rechargé par la variation de flux magnétique créé lors de la rotation du ventilateur 5a. Il est toutefois nécessaire de disposer d'un dispositif de redressement (non représenté) du courant alternatif.

L'unité de commande électronique 6 est apte à commander le mode de fonctionnement « générateur » ou « moteur » du ventilateur en fonction de la température mesurée par un moyen de mesure 7 dans le compartiment 2 du moteur thermique 3.

Lorsque le ventilateur 5a fonctionne en mode « moteur », l'unité électronique de commande 6 génère un champ électromagnétique tournant permettant au ventilateur 5a d'être mis en rotation grâce à la coopération des moyens aimantés 10 avec les bobinages 11 noyés dans le carénage inférieur 4.

En variante, le moteur électrique 5b pourrait être alimenté en énergie électrique par le réseau électrique du véhicule automobile, sans utilisation de moyen autonome 9 de stockage et de génération d'énergie électrique.

Le compartiment moteur 2 et le carénage inférieur 4 peuvent être disposés à l'arrière ou à l'avant du véhicule automobile 1.

Le véhicule automobile 1 peut également comprendre un dispositif de refroidissement classique (non représenté) du moteur à combustion interne 3 disposé en amont du moteur à combustion interne 3 et comportant un échangeur de chaleur (non représenté) dans lequel circule un fluide de refroidissement et un deuxième ventilateur (non représenté) disposé en amont ou en aval de l'échangeur de chaleur et destiné à souffler ou à aspirer de l'air au travers de l'échangeur de chaleur en direction sensiblement horizontale du moteur à combustion interne 3.

Grâce à l'intégration du groupe moto-ventilateur directement dans le carénage inférieur, les composants logés dans le compartiment moteur sont efficacement refroidis, notamment les composants disposés au-dessus du moteur à combustion interne.

Par ailleurs, grâce à l'invention, le compartiment moteur est refroidi pendant les phases de fonctionnement, de ralenti et d'arrêt du moteur thermique.

De plus, grâce à l'intégration du ventilateur d'axe vertical au carénage inférieur, il est aisé de refroidir convenablement les moteur à combustion interne disposés à l'arrière du véhicule malgré l'encombrement réduit qui ne permet pas de recevoir un dispositif de refroidissement classique comprenant un échangeur de chaleur et un ventilateur d'axe horizontal en amont de l'échangeur de chaleur.

## Revendications

1. Véhicule automobile à propulsion thermique ou hybride comprenant au moins un moteur à combustion interne (3) disposé dans un compartiment moteur (2), un carénage inférieur (4) destiné à fermer la partie inférieure du compartiment moteur (2), **caractérisé en ce qu'**il comprend un ventilateur (5a), d'axe vertical (Y) et un moteur électrique (5b) alimentant en énergie électrique le ventilateur (5a), ledit ventilateur (5a) étant disposé de manière substantiellement horizontale dans le carénage inférieur (4) sous le compartiment du moteur à combustion interne (2).

2. Véhicule automobile selon la revendication 1, dans lequel le moteur électrique (5b) est alimenté en énergie électrique par le réseau électrique du véhicule automobile (1).

3. Véhicule automobile selon la revendication 1, dans lequel le moteur électrique (5b) est alimenté en énergie électrique par un moyen autonome (9) de génération et de stockage d'énergie électrique.

4. Véhicule automobile selon la revendication 3, dans lequel le moyen autonome (9) de génération et de stockage d'énergie électrique est rechargé en énergie électrique par la rotation du ventilateur (5a) mis en rotation par le déplacement d'un flux d'air lorsque le véhicule automobile (1) est en mouvement.

5. Véhicule automobile selon la revendication 3 ou 4, dans lequel le moteur électrique (5b) est un moteur à courant continu.

6. Véhicule automobile selon la revendication 3 ou 4, comprenant des aimants permanents (10) disposés à l'extrémité du ventilateur (5a) et un bobinage (11) noyé dans le carénage inférieur (4), le moyen autonome (9) de stockage d'énergie électrique étant rechargé par le courant induit par la variation de flux magnétique créée lors de la rotation du ventilateur (5a).

7. Véhicule automobile selon l'une quelconque des revendications 1 à 6, comprenant une unité de commande électronique (6) apte à commander la mise en rotation du ventilateur (5a) en fonction de la température mesurée par un moyen de mesure (7) dans le compartiment (2) du moteur thermique (3).

8. Véhicule automobile selon la revendication 7, comprenant un volet d'admission (4a) d'air piloté par l'unité de commande électronique (6) en fonction de la vitesse du véhicule et des températures mesurées par au moins un moyen de mesure (7) dans le compartiment (2) du moteur à combustion interne (3).

9. Véhicule automobile selon l'une quelconque des revendications 1 à 8, dans lequel le compartiment moteur (2) et le carénage inférieur (4) sont disposés à l'arrière du véhicule automobile (1).

10. Véhicule automobile selon l'une quelconque des revendications 1 à 9, comprenant un dispositif de refroidissement du moteur à combustion interne (3) disposé en amont ou en aval du moteur à combustion interne (3) et comportant un échangeur de chaleur dans lequel circule un fluide de refroidissement et un deuxième ventilateur d'axe horizontal (X) disposé en amont de l'échangeur de chaleur et destiné à souffler ou à aspirer de l'air au travers de l'échangeur de chaleur en direction sensiblement horizontale vers le moteur à combustion interne (3).

## Patentansprüche

1. Kraftfahrzeug mit thermischem Antrieb oder Hybridantrieb, welches wenigstens einen Verbrennungsmotor (3), der in einem Motorraum (2) angeordnet ist, und eine untere Verkleidung (4), die dazu bestimmt ist, den unteren Teil des Motorraums (2) zu verschließen, aufweist, **dadurch gekennzeichnet, dass** es ein Gebläse (5a) mit einer vertikalen Achse (Y) und einen Elektromotor (5b), der das Gebläse (5a) mit elektrischer Energie versorgt, aufweist, wobei das Gebläse (5a) im Wesentlichen horizontal in der unteren Verkleidung (4) unter dem Motorraum (2) des Verbrennungsmotors angeordnet ist.

2. Kraftfahrzeug nach Anspruch 1, wobei der Elektromotor (5b) durch das Stromnetz des Kraftfahrzeugs (1) mit elektrischer Energie versorgt wird.

3. Kraftfahrzeug nach Anspruch 1, wobei der Elektromotor (5b) durch ein autonomes Mittel (9) zur Erzeugung und Speicherung von elektrischer Energie mit elektrischer Energie versorgt wird.

4. Kraftfahrzeug nach Anspruch 3, wobei das autonome Mittel (9) zur Erzeugung und Speicherung von elektrischer Energie durch die Rotation des Gebläses (5a) wieder mit elektrischer Energie aufgeladen wird, das durch das Strömen eines Luftstroms in Rotation versetzt wird, wenn sich das Kraftfahrzeug (1) in Bewegung befindet.

5. Kraftfahrzeug nach Anspruch 3 oder 4, wobei der Elektromotor (5b) ein Gleichstrommotor ist.

6. Kraftfahrzeug nach Anspruch 3 oder 4, welches Permanentmagnete (10), die am Ende des Gebläses (5a) angeordnet sind, und eine in die untere Verkleidung (4) eingelassene Wicklung (11) aufweist, wobei das autonome Mittel (9) zur Speicherung von elektrischer Energie durch den Strom wieder aufgeladen wird, der durch die bei der Rotation des Gebläses (5a) erzeugte Magnetflussänderung induziert wird.

7. Kraftfahrzeug nach einem der Ansprüche 1 bis 6, welches ein elektronisches Steuergerät (6) aufweist, das geeignet ist, das Versetzen des Gebläses (5a) in Rotation in Abhängigkeit von der Temperatur zu steuern, die von einem Messmittel (7) im Motorraum (2) des Verbrennungsmotors (3) gemessen wird.

8. Kraftfahrzeug nach Anspruch 7, welches eine Lufteinlassklappe (4a) aufweist, die von dem elektronischen Steuergerät (6) in Abhängigkeit von der Geschwindigkeit des Fahrzeugs und den Temperaturen, die von wenigstens einem Messmittel (7) im Motorraum (2) des Verbrennungsmotors (3) gemessen werden, vorgesteuert wird.

9. Kraftfahrzeug nach einem der Ansprüche 1 bis 8, wobei der Motorraum (2) und die untere Verkleidung (4) im hinteren Bereich des Kraftfahrzeugs (1) angeordnet sind.

10. Kraftfahrzeug nach einem der Ansprüche 1 bis 9, welches eine Vorrichtung zur Kühlung des Verbrennungsmotors (3) aufweist, die dem Verbrennungsmotor (3) vorgeschaltet oder nachgeschaltet ist und einen Wärmetauscher, in welchem ein Kühlfluid zirkuliert, und ein zweites Gebläse mit horizontaler Achse (X), das dem Wärmetauscher vorgeschaltet ist und dazu bestimmt ist, Luft durch den Wärmetauscher hindurch in einer im Wesentlichen horizontalen Richtung zu dem Verbrennungsmotor (3) hin zu blasen oder zu saugen, aufweist.

## Claims

1. Motor vehicle with combustion-engine or hybrid propulsion comprising at least one internal combustion engine (3) arranged in an engine compartment (2), a lower fairing (4) intended to close off the lower part of the engine compartment (2), **characterized in that** it comprises a fan (5a) of vertical axis (Y) and an electric motor (5b) supplying the fan (5a) with electrical energy, said fan (5a) being arranged substantially horizontally in the lower fairing (4) under the internal combustion engine compartment (2).

2. Motor vehicle according to Claim 1, in which the electric motor (5b) is supplied with electrical energy by the electrical network of the motor vehicle (1).

3. Motor vehicle according to Claim 1, in which the electric motor (5b) is supplied with electrical energy by an autonomous electrical-energy generation and storage means (9).

4. Motor vehicle according to Claim 3, in which the autonomous electrical-energy generation and storage means (9) is recharged with electrical energy by the rotation of the fan (5a) set in rotation by the movement of a flow of air when the motor vehicle (1) is in motion.

5. Motor vehicle according to Claim 3 or 4, in which the electric motor (5b) is a DC motor.

6. Motor vehicle according to Claim 3 or 4, comprising permanent magnets (10) arranged at the end of the fan (5a) and a coil (11) embedded in the lower fairing (4), the autonomous electrical-energy storage means (9) being recharged with the current induced by the variation in magnetic flux that is created as the fan (5a) rotates.

7. Motor vehicle according to any one of Claims 1 to 6, comprising an electronic control unit (6) able to set the fan (5a) in rotation as a function of the temperature measured by a measurement means (7) in the combustion engine (3) compartment (2).

8. Motor vehicle according to Claim 7, comprising an air intake flap (4a) operated by the electronic control unit (6) as a function of the speed of the vehicle and of the temperatures measured by at least one measurement means (7) in the internal combustion engine (3) compartment (2).

9. Motor vehicle according to any one of Claims 1 to 8, in which the engine compartment (2) and the lower fairing (4) are arranged at the rear of the motor vehicle (1).

10. Motor vehicle according to any one of Claims 1 to 9, comprising an internal combustion engine (3) cooling device arranged upstream or downstream of the internal combustion engine (3) and comprising a heat exchanger through which a coolant circulates and a second fan of horizontal axis (X) arranged upstream of the heat exchanger and intended to blow or suck air through the heat exchanger in a substantially horizontal direction toward the internal combustion engine (3).
